# EUROPÄISCHE PATENTSCHRIFT

(11) **EP 1 933 214 B1**
(45) Veröffentlichungstag und Bekanntmachung des Hinweises auf die Patenterteilung: **06.06.2018**
(21) Anmeldenummer: 07019224.0
(22) Anmeldetag: 29.09.2007
(51) Int. Cl.: G05B 17/00, G06F 17/50, G05B 19/418

(54) **Automatisierte Erstellung und Adaption eines Maschinen- oder Anlagenmodells**
Automated generation and adaptation of a machine or plant model
Génération et adaptation automatisée d'un modèle de machine ou d'installation

(30) Priorität: 15.12.2006 DE 102006059430
(43) Veröffentlichungstag der Anmeldung: 18.06.2008
(73) Patentinhaber: ROBERT BOSCH GMBH, 70469 Stuttgart (DE)
(72) Erfinder: Landgraf, Günther, 97753 Karlstadt (DE)
(74) Vertreter: Thürer, Andreas

(56) Entgegenhaltungen:
- DE-A1- 10 104 163
- US-A1- 2005 137 721

## Beschreibung

Die Erfindung bezieht sich auf ein Automatisierungssystem zur Erstellung sowie zur Adaption eines Maschinen- oder eines Anlagenmodells, das zur Prüfung von Steuerprogrammen einer Steuerung anhand einer virtuellen Maschine oder einer virtuellen Anlage herangezogen wird. Weiterhin betrifft die Erfindung ein Verfahren zur Simulation der Maschine oder der Anlage; die durch das Steuerungsprogramm gesteuert wird.

Bekannt ist es im Stand der Technik, Maschinen und Anlagen mit Hilfe eines Softwareprogramms unter Verwendung von Maschinen-/Anlagenmodellen nachzubilden, so dass die Maschine bzw. die Anlage simuliert wird.

Um das Verhalten der Maschine bzw. Anlage mit ihrer Peripherie in ein so genanntes Maschinen-/Anlagenmodell überführen zu können, müssen aufwändige Messungen und Analysen durchgeführt werden. Hilfsmittel sind hierbei beispielsweise ein SPS-, ein NC- oder ein sogenanntes Antriebs-Oszilloskop. Mit diesen lassen sich Einzelmessungen an einer Maschine durchführen. Aufgrund dieser Daten kann dann die Modellierung der einzelnen Komponenten, wie etwa einer Hydraulikpumpe erfolgen. Zum einen ist hierfür das zugehörige mathematisches Modell aus einer Bibliothek auszuwählen (sofern vorhanden) bzw. unter Verwendung mathematischer Funktionen zu erstellen (sofern keine Bibliothek vorhanden ist). Des Weiteren ist das mathematische Modell einer Komponente mittels Parameter (Koeffizienten der betreffenden Funktion) so zu adaptieren, das es möglichst der in der Realität vorhandenen Komponente entspricht. Beispielsweise ist die Verzögerungszeit zwischen dem Eingangssignal und dem Ausgangssignal an der Maschine zu messen und dem mathematischen Modell als Parameter vorzugeben.

Mit diesen aufwändig erstellten Modellen können dann Steuerungsprogramme, wie etwa NC- und SPS- Programme getestet werden, und zwar ohne Benutzung einer realen Maschine. Dadurch kann die Steuerungssoftware einer Maschine unter vielfältigen Einsatzbedingungen geprüft werden. Diese Vorgehensweise verkürzt die Inbetriebnahme einer Maschine bzw. einer Anlage wesentlich.

Häufig ist diese Adaption von Maschinenmodellen, beispielsweise zur Verhaltenssimulation, im Vergleich mit der zu simulierenden realen Maschine nur unzureichend genau. Eine Verbesserung des Maschinenmodells kann nur mit einem sehr hohen Aufwand erfolgen. Dadurch ergeben sich lange Entwicklungszeiten und hohe Entwicklungskosten.

Für die Neuerstellung eines Maschinenmodells zur Verhaltenssimulation benötigt ein Anwender, dem nur Elementarfunktionen zur Verfügung stehen, etwa 2 Mannmonate. Diese Schätzung trifft bei nahezu allen Anwendern zu, die zum ersten Mal ein Maschinenmodell erstellen und nicht auf eine umfassende Komponentenbibliothek zurückgreifen können.

Genauer betrachtet muss der Anwender sein Maschinenmodell für jede einzelne Komponente von Hand aufbauen. Dies bedeutet zum Beispiel im Bereich der Verhaltenssimulation, dass der Anwender das Verhalten der einzelnen Komponenten unter Verwendung von Elementarfunktionen (wie etwa Addierer, Subtrahierer, Zeitglieder oder Polynome n-Grades, um nur einige zu nennen) erstellt und die zugehörigen Parameter bzw. Koeffizienten der Funktionen an der realen Maschine ermittelt (Parameteridentifikation) diese dann auf eine virtuelle Komponente überträgt. Auf diese Weise wird das Gesamtverhalten der Maschine bzw. Anlage nachbildet. DE 101 04 163 A1 offenbart eine Steuerungs- und/oder Überwachungsanlage zur Erstellung und/oder Adaption eines Maschinenmodells einer Maschine (2; 2') zur Verhaltenssimulation der Maschine. US 2005/0137721 offenbart ein Verfahren für ein Automatisierungssystem gemäß dem Oberbegriff von Anspruch 1.

Der Erfindung liegt die Aufgabe zugrunde, eine Lösung zu finden, mit der in kurzer Zeit ein Maschinenmodell neu erstellt werden kann, wobei das Maschinenmodell sehr realitätsnah sein soll sowie ein bereits vorhandenes Maschinenmodell sehr schnell und einfach an eine reale Maschine angepasst werden kann.
Die Aufgabe wird durch ein Automatisierungssystem nach Anspruch 1 und ein Verfahren nach Anspruch 9 gelöst.

Durch die erfindungsgemäße automatisierte Erfassung unterschiedlichster Daten auf den verschiedensten Zeitebenen der Steuerung, entfallen aufwändige Messungen, sowie aufwändige Berechnungen, beispielsweise zur Mittelwertbildung von erfassten Messwerten. Das erfindungsgemäße System kann dort angewendet werden, wo Maschinen und Anlagen zu Simulationszwecken nachgebildet werden. Das System ist außerdem zur Nachbildung des Verhaltens einer Maschinenperipherie geeignet, um ein Steuerungsprogramm, wie etwa ein SPS-Programm, bereits vorab, d.h. vor Inbetriebnahme einer realen Maschine, überprüfen zu können. Das erfindungsgemäße System eignet sich zudem für eine Dynamik- oder Prozesssimulation.

Durch das erfindungsgemäße System ist eine genaue Adaption von Maschinenmodellen, insbesondere zur Verhaltenssimulation, an realen Maschinen möglich. Der zeitliche Aufwand zur Bildung des Maschinenmodells ist sehr gering. Weiterhin entfallen durch die Erfindung aufwändige Messungen, die anschließend von Hand in das Maschinenmodell übernommen werden müssen.

Dadurch, dass die durch die Datenanalyse ermittelten Kenngrößen des Maschinen- und Anlagemodells in der virtuellen Maschine oder der virtuellen Anlage automatisch speicherbar sind, um ein Maschinen- oder Anlagenverhalten einer realen Maschine und Anlage zu simulieren, ist es möglich, dass ein Mittelwert für einen zeitlichen Ablauf, beispielsweise von dem Einschalten einer Hydraulikpumpe durch Setzen eines Ausgangssignals bis zur Rückmeldung "Druck ist aufgebaut" (setzen eines Eingangssignals) gebildet wird. Aufwändige Messungen (zum Beispiel n-Messungen zur Mittelwertbildung), die ansonsten von Hand ausgeführt werden müssen, können entfallen.

Das erfindungsgemäße System erlaubt, dass in einfacher Weise ein Maschinenmodell bzw. ein Verhaltensmodell für verschiedene Abläufe einer Maschine nachgebildet wird. Die Nachbildung der einzelnen Abläufe erfolgt in bevorzugter Weise unter Verwendung einfacher Funktionen, wie beispielsweise einer Zeitgliedfunktion. Die Werte für diese Funktionen werden automatisiert erfasst und in das Maschinenmodell übernommen.

Durch eine Langzeitaufzeichnung von Daten und insbesondere von Steuerungsdaten ist es möglich, dass erforderliche Messpunkte ausgewählt und mathematischen Methoden unterworfen werden. Beispielsweise kann eine Mittelwertbildung von Δt-Werte oder eine Ermittlung von Koeffizienten und von Kurvenverläufen, insbesondere Polynome n-ten Grades, mittels aufgezeichneter Punkte erfolgen. Diese Langzeitaufnahmen können beispielsweise aus dem Betrieb mit vergleichbaren Maschinen (z.B. älteren Maschinen oder Prototypen) gewonnen werden. Für die Aufzeichnung ist es ausreichend, wenn ein PC bzw. ausreichend Speicher zum Abspeichern der anfallenden Datenmenge vorhanden ist.

Ein Anwender des Systems erhält auf diese Weise innerhalb kurzer Zeit Kenngrößen der relevanten Abläufe. Das erfindungsgemäße System liefert in einfacher Weise fundierte Aussagen bezüglich zeitlicher Abläufe, des Prozesses sowie Belastungen der Maschine, der Werkzeuge und der Werkzeugstücke. Die verbesserten Aussagen lassen sich auf Grund der erhöhten Genauigkeit der Datenerfassung über längere Zeiträume hinweg sowie aufgrund der Datenaufbereitung unter Einbeziehung von Abweichungen um einen Mittelwert durchführen.

In einer vorteilhaften Weiterbildung des erfindungsgemäßen Automatisierungssystems ist vorgesehen, dass das Steuerungssystem eine speicherprogrammierbare Steuerung (SPS) umfasst. Eine SPS ist zur Steuerung von Maschinen im industriellen Bereich sehr geeignet. Mit dem erfindungsgemäßen Automatisierungssystem kann ein Programm einer speicherprogrammierbaren Steuerung getestet werden, ohne dass eine reale Maschine an die speicherprogrammierbare Steuerung angeschlossen werden muss. Zweckmäßigerweise umfasst das Steuerungssystem auch eine NC-Steuerung, bzw. eine Motion- oder Roboter-Steuerung. Mit einer NC-Steuerung lassen sich Maschinen in bekannter Weise steuern, wobei diese Steuerung in dem Maschinenmodell berücksichtigt ist.

Dadurch, dass an dem Steuerungssystem auch ein PC angeschlossen ist, lassen sich hohe Datenmengen über längere Zeiträume hinweg speichern und verarbeiten. So können relativ viele und vor allem Langzeitmessungen durchgeführt werden, die durch geeignete Auswertungsprogramme analysiert werden. Durch den Einsatz eines PCs bzw. eines entsprechenden Speichermediums können diese Analysen in kostengünstiger Weise umgesetzt werden, wobei der PC bzw. das Speichermedium nur während der Aufzeichnung der Messdaten angeschlossen sein muss. Danach kann aus einer Langzeitaufzeichnung (mit ausreichender Auflösung) von Steuerungsdaten (NC, SPS, PC, Drive...) mit Hilfe intelligenter Algorithmen, welche unten im Detail beschrieben werden, das Modell bzw. das Verhalten der einzelnen Komponenten automatisiert ermittelt und dann in die betreffende Simulationsumgebung eingespielt werden. Optional könnte auch auf den eventuell vorhandenen Antrieben und/oder Feldbusgeräten Aufzeichnungen durchgeführt werden, die dann wiederum auf dem PC oder in einem geeigneten Speichermedium zusammengeführt werden.

In vorteilhafter Weise ist das Steuerungssystem mit einem Antriebsbus versehen. Der mit einer Maschine oder einer Anlage verbindbare Antriebsbus kann wahlweise mit einer virtuellen Maschine zur Verhaltens- bzw. Dynamiksimulation eingesetzt werden, und zwar einerseits an einer virtuellen Maschine sowie andererseits an einer realen Maschine. Wenn das erfindungsgemäße Steuerungssystem einen mit der Maschine oder der Anlage verbindbaren Feldbus aufweist, welcher mit mindestens einem Ein- und Ausgabemodul (E/A) der Maschine oder der Anlage verbindbar ist, können in vorteilhafter Weise standardisierte Protokolle eingesetzt werden. Feldbusse sind seit langem erprobt und haben sich in der Praxis bewährt.

Erfindungsgemäß ist ein Verfahren zur automatisierten Modellerstellung einer Maschine oder einer Anlage, die durch ein oder mehrere Steuerungsprogramme gesteuert wird, mit einem Automatisierungssystem vorgesehen. Dabei werden von einer Datenaufzeichnungseinheit aufgenommene Daten in einer Datenaufbereitungseinheit analysiert und Funktionen einschließlich der zugehörigen Parameter erzeugt. Das Maschinen- oder Anlagenmodell wird für die einzelnen Komponenten unter Verwendung mathematischer Funktionen nachgebildet, in dem die Funktion und deren Parameter in automatisierter Weise in das Maschinen- oder Anlagenmodell übernommen werden. Unter einer Funktion wird dabei jede Zuordnungsvorschrift verstanden, die einem bestimmten Eingabewert einen bestimmten Ausgabewert zuordnet.

Die Datenaufbereitungseinheit kann wahlweise direkt auf dem Steuerungs-PC oder auf einem separaten PC realisiert sein, wobei der separate PC (Server) direkt über eine Netzverbindung oder alternativ über Internet-Verbindung zugänglich ist. Die Aufbereitung der Daten zur Erstellung und Adaption von Maschinen-/Komponentenmodellen kann als Dienstleistung zentral über das Internet angeboten werden, mit dem Vorteil, dass die Modellierungssoftware stets auf dem neuesten Stand ist. Erfindungsgemäß ist eine Schneidefunktion vorgesehen, d.h. mit jeder Änderung eines Eingangssignals wird auch das zugehörige Ausgangssignal (insbesondere die Änderungen) aus einer vorhandenen Messung ausgeschnitten.

Diese Schneidefunktion (Cutter) ermittelt mit anderen Worten innerhalb der Maschinenmodell-Erzeugungs- bzw. -Adaptions-Einheit für jede aufgezeichnete Eingangssignalkombination den zugehörigen Ausgangswert einschließlich der Zeitverzögerung bei booleschen Funktionen bzw. die zugehörige Ausgangssignal-Sequenz einschließlich der Zeitverzögerung bei nicht-booleschen Funktionen aus einer vorhandenen Messung.

Die auf diese Weise ermittelten Ausgangswerte bzw. Ausgangsignal-Sequenzen werden dann innerhalb des Solvers (zyklischer Teil einer virtuellen Maschine zur Abarbeitung des Maschinenmodells) in Abhängigkeit der Eingangssignale bevorzugt taktsynchron ausgegeben (Player).

Durch die automatisierte Erfassung kann eine virtuelle Maschine sehr nah an eine reale Maschine angeglichen werden. Die erfindungsgemäße automatisierte Erfassung erleichtert das Erstellen eines Maschinenmodells ganz erheblich. Die Erfindung verkürzt Entwicklungszeiten sowie Entwicklungskosten in erheblicher Weise. Dabei ist es bevorzugt auch möglich, etwaige in den Daten nicht dargestellte Funktionen zu simulieren. Dies wird unter Bezugnahme auf die Figuren genauer erläutert.

In einer vorteilhaften Weiterbildung des erfindungsgemäßen Verfahrens ist vorgesehen, dass die Funktionswerte Werte von elementaren Funktionen sind. In der Praxis werden die einzelnen Komponenten einer Maschine, z.B. einer Werkzeugmaschine, größtenteils als verzögerte boolesche Funktionen für das Verhaltensmodell abgelegt. Sehr günstig ist es, wenn alle möglichen Zustandsänderungen an den Eingangssignalen sowie die zugehörigen Änderungen an den Ausgangssignalen einschließlich der zugehörigen zeitlichen Verzögerung (Δt-Werte) erfasst werden. Des Weiteren ermöglicht eine Mittelwertbildung zuverlässigere Aussagen hinsichtlich der Funktionsbeschreibung. Bei booleschen Funktionen wird neben dem neuen Wert des Ausgangssignals insbesondere die zeitliche Verzögerung festgehalten. Durch die Mittelwertbildung lassen sich äußere Einflüsse, wie beispielsweise Temperaturschwankungen oder andere Schwankungen infolge von Umgebungseinflüssen, berücksichtigen.

Aufwändigere Funktionen können in vorteilhafter Weise dadurch berücksichtigt werden, dass Funktionswerte Koeffizienten von Kurvenverläufen, insbesondere Polynome n-ten Grades sind. Mit solchen Polynomen lässt sich ein Maschinenmodell sehr realitätsnah schaffen.

In einer vorteilhaften Weiterbildung der Erfindung ist vorgesehen, dass wiederkehrende Messpunkte und/oder Signalsequenzen automatisch erkannt und bei einer Mittelwertbildung berücksichtigt werden. Durch diese wiederkehrenden Messpunkte kann ein typisches Anlagenverhalten bzw. ein typisches Maschinenverhalten genau beschrieben werden.

Eine Datenübernahme zwischen dem Steuerungssystem, der Datenaufbereitungseinheit, der realen Maschinen und/oder der virtuellen Maschine oder der Anlage kann auf verschiedene Art und Weise erfolgen.

So kann eine Übernahme mittels sogenannter Drag & Drop Technik erfolgen. Die Datenübernahme mittels Drag & Drop Technik vereinfacht das Erstellen sowie die Adaption eines Maschinenmodells. So müssen beispielsweise eine reale Maschine und eine erfindungsgemäße Datenaufbereitungseinheit nicht in ein und demselben Raum stehen. Dadurch ist die Bildung eines Maschinenmodells in einfacher und bequemer Weise möglich.

Alternativ kann eine Datenübernahme zwischen dem Steuerungssystem der Datenaufbereitungseinheit, der realen Maschine und/oder der virtuellen Maschine oder Anlage auch mittels Import-/Exportfunktiönen insbesondere im XML-Format erfolgen. Da sich ein solches Format in der Praxis sehr bewährt hat, ist eine sichere Datenübernahme möglich.

Eine weitere Möglichkeit des Datenaustauschs besteht darin, dass die Daten automatisch mit Beenden einer Aufzeichnung von einem realen oder virtuellen Steuerungssystem an die Datenaufbereitungseinheit übertragen werden (z.B. auch via Internet), dort aufbereitet werden und dann wiederum (unter Verwendung eines eindeutigen Identifiers) automatisch (z.B. auch via Internet) als optimierte Maschinenmodelle an die virtuelle Maschine übertragen werden, wobei die Übertragung der Maschinenmodelle an die Virtuelle Maschine (Solver), sogar während des laufenden Simulationsbetriebs erfolgen könnte.

Des Weiteren kann zwischen einer vollständigen Übertragung des Maschinenmodells und einer Teilübertragung unterschieden werden. Eine Teilübertragung ist insbesondere bei einer Modelladaption sinnvoll, wenn sich zwischen dem letzten an die virtuellen Maschine übertragenen Maschinenmodell zum neu ermittelten Maschinenmodell nur einzelne Parameter oder Datensequenzen, geändert haben.

Eine erfindungsgemäße Variante des erfindungsgemäßen Verfahrens zeichnet sich dadurch aus, dass zur Ermittlung des Maschinen- oder Anlagenmodells boolesche Funktionen eingesetzt werden. Mittels der in einer Tabelle hinterlegten booleschen Daten, die Eingangs- oder Ausgangssignalen entsprechen, können boolesche Funktionen in relativ einfacher Weise ermittelt werden. Boolesche Funktionen können mittels eines Rechners sehr einfach umgesetzt werden. Dadurch wird ein Maschinenmodell sehr vereinfacht, wobei eine realitätsnahe Simulation möglich ist. Erfindungsgemäß wird ein Cutter eingesetzt, der in der Datenaufbereitungseinheit aus einer Langzeitaufnahme für alle auftretende Eingangssignal-Kombinationen das zugehörige Ausgangssignal unter Berücksichtigung der zeitlichen Verzögerung ausschneidet.

Im Zusammenhang mit der Peripherie von Werkzeugmaschinen, wie etwa einem Hydrauliksystemen ist es besonders günstig, wenn neben den Änderungen der Ein- und Ausgänge auch die Zeitverzögerungswerte in einer Tabelle hinterlegt werden. Dies erleichtert die Datenanalyse.

Alternativ oder zusätzlich können in vorteilhafter Weise auch nicht boolesche Daten verwendet werden, die zur Erzeugung des Maschinen- oder Anlagenmodells vorgesehen sind. Nicht boolesche Daten sind typischerweise Funktionen die mehrere Pegelhöhen umfassen. Verschiedene Pegelwerte können beispielsweise bei einer Hydraulikpumpe vorkommen. Auch hier kann alternativ (wie bereits weiter oben beschrieben) anstelle der genauen Funktionsermittlung (z.B. Polynom 3-ten Grades) und der zugehörigen Parameteridentifikation auch ein Cutter zum Einsatz kommen, der für die vorkommenden Eingangssignalkombinationen die jeweilige Ausgangssequenz ausschneidet; die dann im Solver beim Auftreten der jeweiligen Eingangssignalkombination wieder ausgegeben werden (Player).

In einer zweckmäßigen Weiterbildung des erfindungsgemäßen Verfahrens ist weiterhin vorgesehen, dass Daten eines realen Steuerungssystems aufgezeichnet werden, wobei das reale Steuerungssystem an der realen Maschine angeschlossen ist. Zudem werden Daten eines zweiten realen Steuerungssystems oder virtuellen Steuerungssystems aufgezeichnet, wobei das zweite Steuerungssystem an der virtuellen Maschine oder virtuellen Anlage angeschlossen ist. Die Daten der virtuellen Maschine werden dabei mit den Daten der realen Maschine verglichen, wobei eine auf Datenvergleich basierende Optimierung des Maschinenoder Anlagenmodells erfolgt. Dadurch wird ein optimiertes Maschinen- oder Anlagenmodell zur Verfügung gestellt.

Unter Verwendung mehrerer Messungen können weiterhin die Signalverläufe bzw. die zugehörigen Punkte einer Mittelwertbildung unterworfen werden, um eine möglichst realistische Adaption der betreffenden Komponente an die reale Komponente zu erreichen.

Innerhalb der Maschinenmodell-Erstellungseinheit kann optional nach dem Ermitteln einer optimalen Ausgangssignal-Sequenz unter Verwendung mathematischer Hilfsmittel die betreffende Funktion sowie deren Parameter identifiziert werden. Gleiches gilt für die Maschinenmodell-Adaptionseinheit, wobei dort im Gegensatz zur Maschinenmodell-Erstellungseinheit die Funktionsidentifikation entfallen kann, da dort das jeweilige Komponentenmodell bereits vorhanden ist.

Die vorliegende Erfindung ist weiterhin auf ein Verfahren zur Erstellung und/oder Adaption eines Maschinen- oder eines Anlagenmodells einer virtuellen Maschine oder einer virtuellen Anlage zur Verhaltenssimulation gerichtet. Dabei wird erfindungsgemäß in Abhängigkeit von Eingangssignalkombinationen für eine vorgegebene Komponente der Maschine oder Anlage eine zugehörige Ausgangssignalsequenz bzw. ein zugehörigen Ausgangswert taktsynchron ausgegeben, wobei diese Ausgabe innerhalb eines zyklischen Teil einer virtuellen Maschine zur Abarbeitung des Maschinenmodells erfolgt.

Mit anderen Worten ist ein so genannter Player innerhalb des Solvers der Simulationsumgebung vorhanden, wodurch die Ausgangssignal-Sequenzen (bei nicht-boolschen Funktionen) bzw. die Ausgangswerte (bei booleschen Funktionen) für die einzelnen Komponenten direkt als Komponentenmodelle (als Teil des Maschinenmodells) abgespeichert werden können. Die Aufgabe des Players besteht darin innerhalb des Solver während der Abarbeitung in Abhängigkeit der zugehörigen Eingangssignalkombinationen für die jeweilige Komponente die zugehörige Ausgangssignalsequenz bzw. den zugehörigen Ausgangswert taktsynchron aus zu geben.
Neben einem Maschinenmodell, dessen Komponentenmodelle aus Funktionen mit den zugehörigen Parametern bestehen und einem Maschinenmodell, dessen Komponentenmodelle ausschließlich als Ausgangssignal-Sequenzen / Ausgangswerten besehen, sind auch Maschinenmodelle denkbar, bei denen ein Teil der Komponenten mittels Funktionen und zugehörige Parameter beschrieben werden und der andere Teil der Komponenten mittels Ausgangssignal-Sequenzen / Ausgangswerten.

Weitere vorteilhafte Weiterbildungen der Erfindung sind in den Unteransprüchen gekennzeichnet.

Ein Ausführungsbeispiel der Erfindung wird anhand der Zeichnungen näher erläutert, wobei weitere vorteilhafte Weiterbildungen der Erfindung und Vorteile derselben beschrieben sind.

Es zeigen:
- Fig. 1: Steuerungssystem mit Datenaufzeichnungsmechanismus an einer realen Maschine plus Datenaufbereitungseinheit;
- Fig. 2: Reales oder virtuelles Steuerungssystem an einer virtuellen Maschine (mit Maschinenmodell) plus Datenaufbereitungseinheit;
- Fig. 3: Adaption eines Maschinenmodells für boolesche Funktionen
- Fig. 4: Maschinenmodell-Erzeugung für boolesche Funktionen;
- Fig. 5: Maschinenmodell-Erzeugungseinheit
- Fig. 6: Basis-Algorithmus des Cutters für boolesche Funktionen zur Maschinenmodell-Erzeugung;
- Fig. 7: Maschinenmodell-Erzeugung für nicht-boolesche Funktionen;
- Fig. 8: Tabellen mit Signalzustandsänderungen im Zusammenhang mit der Maschinenmodell-Erzeugung nach Fig. 6;
- Fig. 9: Nachträgliche Definition einzelner Signalverläufe für fehlende Zustände sowie zur Modifikation bereits aufgezeichneter Signalverläufe;
- Fig. 10: Adaption eines Maschinenmodells für nicht-boolesche Funktionen;
- Fig. 11: eine Prinzipdarstellung zur Übernahme von ermittelten Daten in das Maschinenmodell; und
- Fig. 12: ein Prinzipschaubild zur Überprüfung des Maschinenmodells.

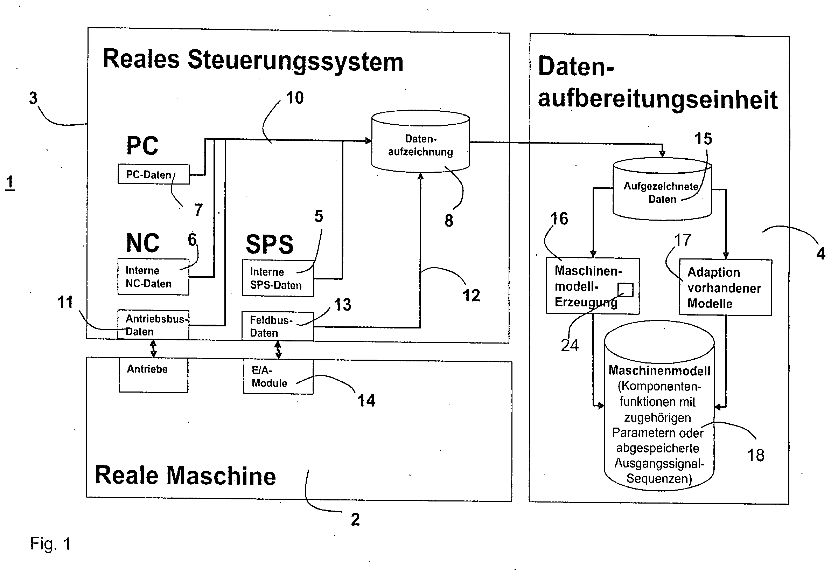

Figur 1 veranschaulicht eine bevorzugte Ausführungsform des erfindungsgemäßen Automatisierungssystems 1. Dieses dient zur Erstellung eines neuen Maschinen- oder Anlagenmodells oder alternativ zur Adaption eines bereits vorhandenen Modells. Wie Figur 1 veranschaulicht, ist zunächst eine reale Maschine 2 an ein reales Steuerungssystem 3 angeschlossen. Das reale Steuerungssystem 3 ist zunächst mit einer Datenaufbereitungseinheit 4 verbunden. Maschinendaten können somit aufgezeichnet werden.

Das reale Steuerungssystem 3 umfasst eine SPS 5, optional eine NC-Steuerung 6 und zumindest zeitweise einen PC bzw. ausreichend Speicher 7 für Langzeitaufzeichnungen (Datenaufzeichnungseinheit) 8. Die SPS 5, die NC-Steuerung 6 (alternativ könnte auch keine NC-Steuerung oder eine Motion- oder Robotersteuerung zum Einsatz können) und der PC bzw. der Speicher 7 sind mit einem gemeinsamen Bus 10 verbunden. Der Bus 10 ist vorzugsweise als Antriebsbus ausgeführt, der eine Schnittstelle 11 zur realen Maschine 2 aufweist.

Weiterhin ist die Datenaufzeichnungseinheit 8 mit einem Feldbus 12 verbunden. Dieser ist mit einer Schnittstelle 13 versehen, die zur Verbindung von E/A Modulen 14 der realen Maschine geeignet sind.

Die SPS 5 des realen Steuerungssystems 3 umfasst interne SPS Daten. Die optional vorhandene NC-Steuerung 6 führt interne NC-Daten, wie es bei derartigen Steuerungen üblich ist. Desweiteren stellt auch der optional.vorhandenen PC 7 der Datenaufzeichnungseinheit 8 PC-Daten zur Verfügung.

Wie Fig. 1 weiterhin veranschaulicht, ist die Datenaufzeichnungseinheit 8 zunächst an die Datenaufbereitungseinheit 4 angeschlossen.

Die Datenaufbereitungseinheit 4 weist einen Datenspeicher 15 zur Aufnahme bereits aufgezeichneter Daten, und eine Maschinenmodell-Erzeugungseinheit 16 und/oder eine Maschinenmodell-Adaptionseinheit 17 sowie einen Maschinenmodellspeicher 18 auf.
Der Datenspeicher 15 enthält eine Kopie der in der Datenaufzeichnungseinheit 8 des realen Steuerungssystems 3 aufgezeichneten Daten. Diese werden in der Maschinenmodell-Erzeugungseinheit 16 einer Datenanalyse unter Verwendung mathematischer Hilfsmittel unterzogen. Damit wird das Maschinenmodell 24 in der Datenanalyseeinheit 16 erzeugt.

Alternativ kann unter Verwendung der Maschinenmodell-Adaptionseinheit 17 für bereits vorhandene Maschinenmodelle eine Parameteridentifikation durchgeführt werden, d.h. anstelle der Funktions-/Parameteridentifikation tritt ausschließlich eine Parameteridentifikation, da durch das Maschinen-/Komponentenmodell die Funktion bereits vorgegeben ist.

Die Übertragung der erforderlichen Modelldaten kann wahlweise als vollständiges Maschinenmodell an die virtuelle Maschine übertragen werden, wenn die Daten aus der Maschinenmodell-Erzeugung 16 stammen oder als Teilmodell, wenn die Daten aus der Maschinenmodell-Adaptionseinheit 17. kommen bzw. wenn sich zwischen dem letzten an die virtuellen Maschine übertragenen Komponenten-/Maschinenmodell zum neu ermittelten Komponenten-/Maschinenmodell nur einzelne Parameter oder Datensequenzen, geändert haben.

Das in der Datenaufbereitungseinheit 4 abgelegte Maschinenmodell im Maschinenmodellspeicher 18 kann entweder aus Komponentenfunktionen mit den zugehörigen Parametern oder alternativ aus abgespeicherten Aufzeichnungssequenzen bestehen.

Durch die in Fig. 1 gezeigten Komponenten können Daten einer realen Maschine unter realen Umgebungsbedingungen aufgezeichnet und analysiert werden. Diese Aufzeichnung geschieht mit dem realen Steuerungssystem 3, so dass die Aufzeichnungen sehr realitätsnah sind (und insbesondere mit ausreichender Aufzeichnungsgenauigkeit vorliegen).

Fig. 1 zeigt damit ein Steuerungssystem 1 mit einer Datenaufzeichnungsstruktur an einer realen Maschine 2 sowie die hierfür verwendete Datenaufbereitungseinheit 4. Die Datenaufzeichnungseinheit 4 kann alternativ auch unmittelbar auf dem Steuerungs-PC untergebracht sein oder auf einem Server realisiert sein, der beispielsweise über eine Internet-Verbindung erreichbar ist.

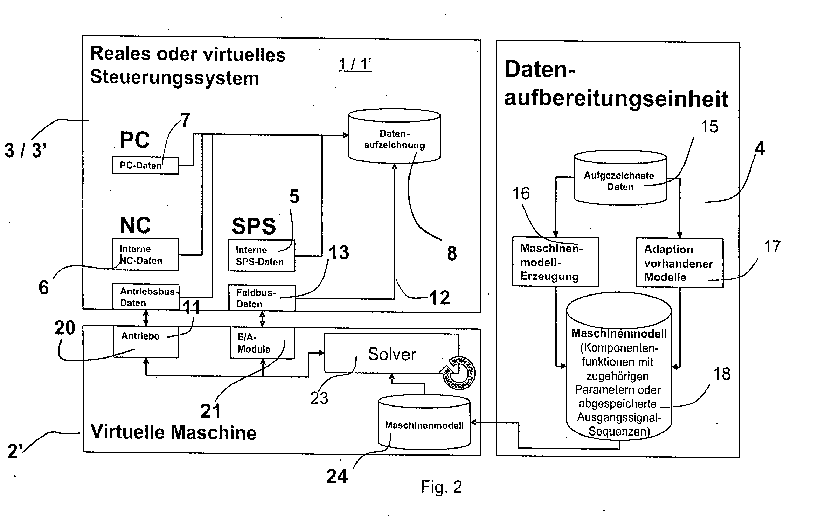

Fig. 2 zeigt ein reales bzw. virtuelles Steuerungssystem, dass in einem nächsten Schritt an einer virtuellen Maschine mit einem Maschinenmodell angeschlossen ist. Das Steuerungssystem 1 kann ein reales Steuerungssystem 1 oder virtuelles Steuerungssystem 1' sein. Diese umfassen die gleiche Struktur wie das in Fig. 1 gezeigte Steuerungssystem 1. Das Steuerungssystem 1 bzw. 1' ist mit einer virtuellen Maschine 2' über den realen oder einen virtuellen Antriebsbus 11 sowie dem realen oder virtuellen Felddatenbus 13 verbunden. Die Maschinenmodelle der Datenaufbereitungseinheit 4 werden der virtuellen Maschine entweder in Form einzelner Komponentenfunktionen mit den zugehörigen Parametern oder als einzelne Signalsequenzen zur Verfügung gestellt. Dies bildet die Basis eines Maschinenmodells 24 wie in Fig. 2 veranschaulicht ist. Das Maschinenmodell 24 wird zyklisch in einem vorgebbaren Takt in einem sogenannten Solver 23 abgearbeitet, der wiederum mit der realen oder virtuellen Antriebsschnittstelle (bzw. den virtuellen Antrieben) 20 bzw. der realen oder virtuellen Feldbusschnittstelle (bzw. den virtuellen E/A Modulen) 21 verbunden ist. Die gezeigte virtuelle Maschine 2' ist zur Verhaltens- bzw. Dynamik- und/oder Antriebs- oder Prozesssimulation vorgesehen.

Wie die Figuren 1 und 2 zeigen, ist das erfindungsgemäße Steuerungssystem mit einer Datenaufzeichnungseinheit 8 zur Aufzeichnung der Maschinendaten versehen, wobei das System 1 eine Datenaufbereitungseinheit 4 zum Analysieren der in der Datenaufzeichnungseinheit 8 aufgezeichneten Daten umfasst.

Erfindungsgemäß werden die durch die Datenanalyse ermittelten Kenngrößen des Maschinenmodells 24 in der virtuellen Maschine 2' gespeichert, um ein Maschinenverhalten einer realen Maschine 2 zu simulieren.

Dies bedeutet, dass zunächst an einem realen Steuerungssystem 1 Messwerte unter realen Einsatzbedingungen aufgezeichnet werden. Daher ist an dem realen Steuerungssystem 1 zunächst eine reale Maschine angeschlossen. Danach werden die aufgezeichneten Daten in den Speicher 15 der Datenaufbereitungseinheit übernommen. Die gemessenen Daten müssen nicht manuell übertragen werden, sondern sie werden via Drag & Drop, Import-/Exportfunktionen oder automatisch nach Beendigung der Messung übertragen, wie in Fig. 1 veranschaulicht ist. Dadurch können aufwändige Messungen sowie Auswertungen entfallen.

Wie Figur 2 zeigt, werden die aufgezeichneten Daten unter Verwendung mathematischer Hilfsmittel in Form eines Maschinenmodells (einzelnen Komponentenfunktionen mit den zugehörigen Parameter oder einzelne Signalsequenzen) der virtuellen Maschine zur Abarbeitung im Solver zur Verfügung gestellt. Die Übertragung kann wahlweise (wie bereits oben erläutert) als vollständiges Maschinenmodell, wenn die Daten aus der Maschinenmodell-Erzeugung 16 stammen an die virtuelle Maschine übertragen werden oder als Teilmodell, wenn die Daten aus der Maschinenmodell-Adaptionseinheit 17.

Wie Figur 2 zeigt, kann sowohl das reale Steuerungssystem als auch das virtuelle Steuerungssystem mit der durch die Erfindung gewonnenen virtuellen Maschine getestet werden. Die virtuelle Maschine weicht durch diese Vorgehensweise nur sehr geringfügig von einer realen Maschine ab, da sie automatisch Umgebungseinflüsse, wie Temperaturschwankungen oder dergleichen berücksichtigt, beziehungsweise Reaktionen auf derartige Einflüsse simuliert.
Die Übernahme der Modelldaten 24 vom Maschinenmodellspeicher 18 der Datenaufbereitungseinheit 4 an den Maschinenmodellspeicher der virtuellen Maschine kann wahlweise via Drag & Drop, mittels import-/Export-Funktionen oder völlig automatisiert (für jede einzelne Komponente anhand eines eindeutigen Identifiers) erfolgen.

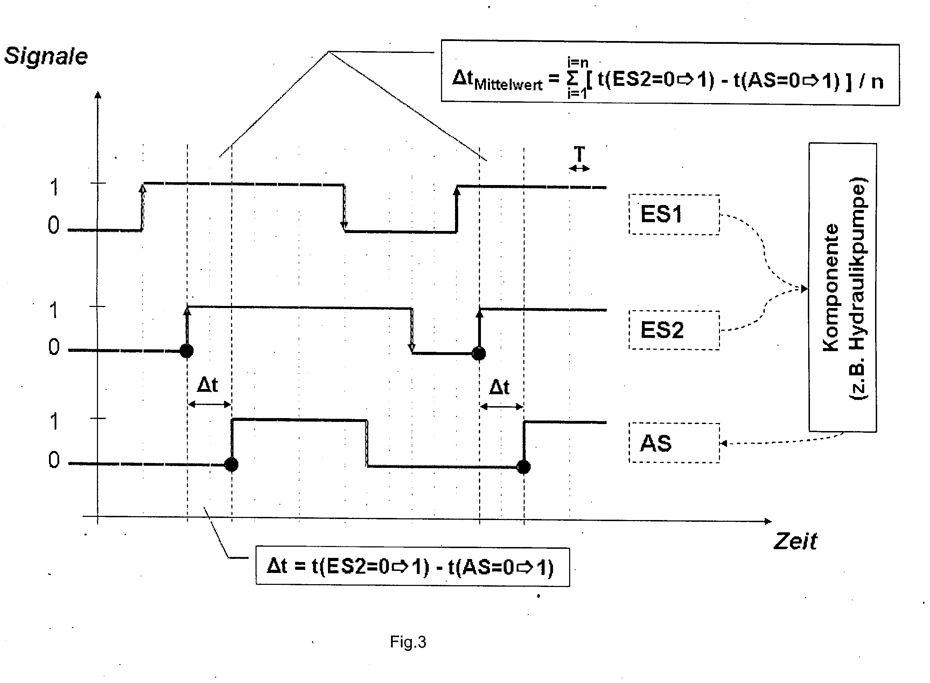

Figur 3 zeigt beispielhaft die Adaption eines bereits vorhandenen Maschinenmodells für boolesche Funktionen unter Verwendung mathematischer Hilfsmittel innerhalb der Maschinenmodell-Adaptionseinheit 17 . Das Bezugszeichen T bezieht sich dabei auf den Aufzeichnungstakt, der besonders bevorzugt auch dem des Solvers (Player-Takt) innerhalb der virtuellen Maschine entspricht.

Wie das Impulsdiagramm gemäß Fig. 3 zeigt, sind beispielsweise zwei Eingangssignale ES 1 und ES 2 vorhanden, die einer Komponente 30, beispielsweise einer Hydraulikpumpe, zugeführt sind. Die Signale ES 1 und ES 2 sind boolesche Signale mit logischen Werten 0 und 1. Die Komponente der Hydraulikpumpe 30 liefert ein Ausgangssignal AS, ebenfalls mit booleschen Werten 0 und 1. Zwischen dem Eingangssignal ES 2 und dem Ausgangssignal AS besteht eine Zeitverzögerung, die mit Δt gekennzeichnet ist. Δt ist die Zeit zwischen beiden ansteigenden Flanken der Impulse ES 2 und AS. In Fig. 3 ist dies durch Δt =t (ES2=0→-1) - t (AS=0→1) dargestellt. Bevorzugterweise wird nicht ein einziger Wert Δt ermittelt, sondern ein Mittelwert Δt aus n Messungen (bzw. einer Langzeitaufzeichnung mit n-Messungen). Fig. 3 veranschaulicht also, dass Funktionswerte von elementaren Funktionen eingesetzt werden, die Δt-Werte von Zeitgliedfunktionen sind. Hierbei werden also mehrere Δt-Werte erfasst, wobei über die Δt-Werte eine Mittelwertbildung erfolgt, so dass ein möglichst realitätsnahes Maschinenmodell gebildet werden kann.

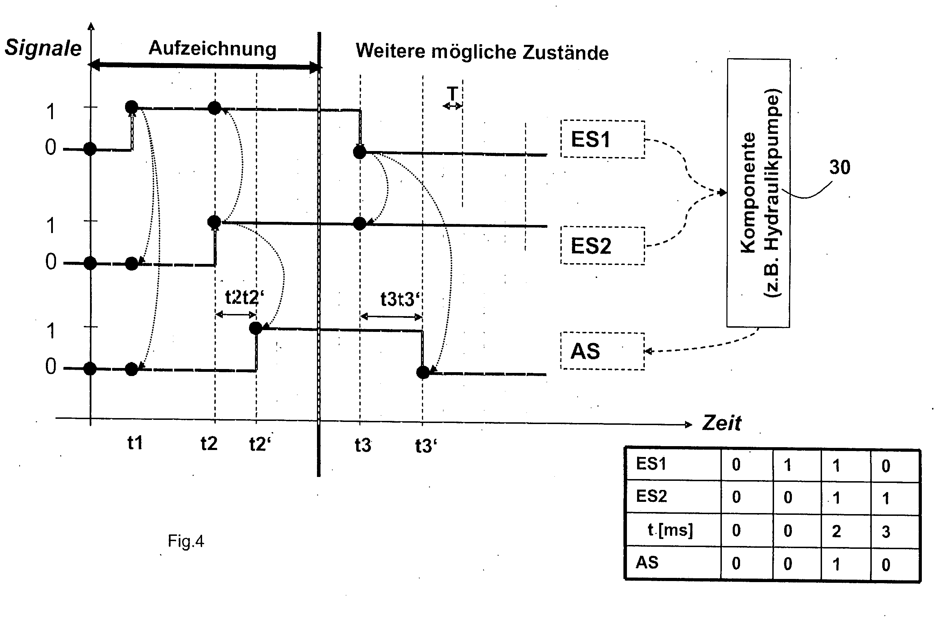

Figur 4 zeigt ein Beispiel zur Maschinenmodell-Erzeugung innerhalb der Maschinenmodell-Erzeugungseinheit 16 für boolesche Funktionen ebenfalls anhand der Komponenten "Hydraulikpumpe" 30. Hierbei liegen zwei Eingangssignale ES1 und ES2 vor, wobei die Signale zeitversetzt sein können. Die ansteigenden Flanken der Signale ES1 und ES2 sind mit t1 und t2 gekennzeichnet. Das Ausgangssignal AS ist ein Signal mit einer ansteigenden Flanke im Zeitpunkt t2' und einer abfallenden Flanke im Zeitpunkt t3'. Im Zeitpunkt t3 fällt das Signal ES1 von logisch 1 auf logisch 0. Im Zeitpunkt t2 steigt das Signal ES2 von logisch 0 auf logisch 1. Das Signal AS zeichnet sich dadurch aus, dass zwei Δt-Werte vorhanden sind, und zwar Δt2t2' und Δt3t3'. Der erste Wert entspricht einer Zeitverzögerung zwischen der ansteigenden Flanke des zweiten Signals ES2 und der ansteigenden Flanke des Ausgangssignals. Der zweite Wert entspricht der Zeitverzögerung zwischen der abfallenden Flanke des ersten Signals ES1 und der abfallenden Flanke des Ausgangssignals. In diesem Beispiel werden also zwei Zeitverzögerungswerte dem Maschinenmodell zugrunde gelegt. Rechts im Diagramm (außerhalb der Aufzeichnung an der Maschine) ist die während der Aufzeichnung nicht erfasste Signalkombination ES1 = 0 und ES2 = 1 beispielhaft gezeigt, die für die Modellerstellung zu berücksichtigen ist.

In der in Figur 4 beispielhaft dargestellten Tabelle korrespondiert die zweite Spalte (ES 1 = 1, ES 2 = 0, Δt = 0, AS = 0) zu dem bei t1- aufgenommenem Wert in Figur 4. Entsprechend korrespondiert die dritte Spalte (ES1 = 1, ES2 = 1, Δt = 2, AS = 1) aus der Tabelle zu dem bei t2' (Fig. 4) aufgenommenen Messwert. Die 4. Spalte in der Tabelle kennzeichnet den letzten noch verbliebenen Zustand, der im Rahmen der Aufzeichnung nicht aufgenommen wurde. Sie wurde vom Anwender vorgegeben. Bei diesem fehlenden Zustand (ES 1 = 0, ES2 = 1) wurde die fehlende Zeitverzögerung Δt auf 3 gesetzt und AS auf den Zustand 0.

Bei Bedarf kann der Anwender auch die von der Modellerzeugungseinheit eingetragenen Werte innerhalb der Tabelle modifizieren.

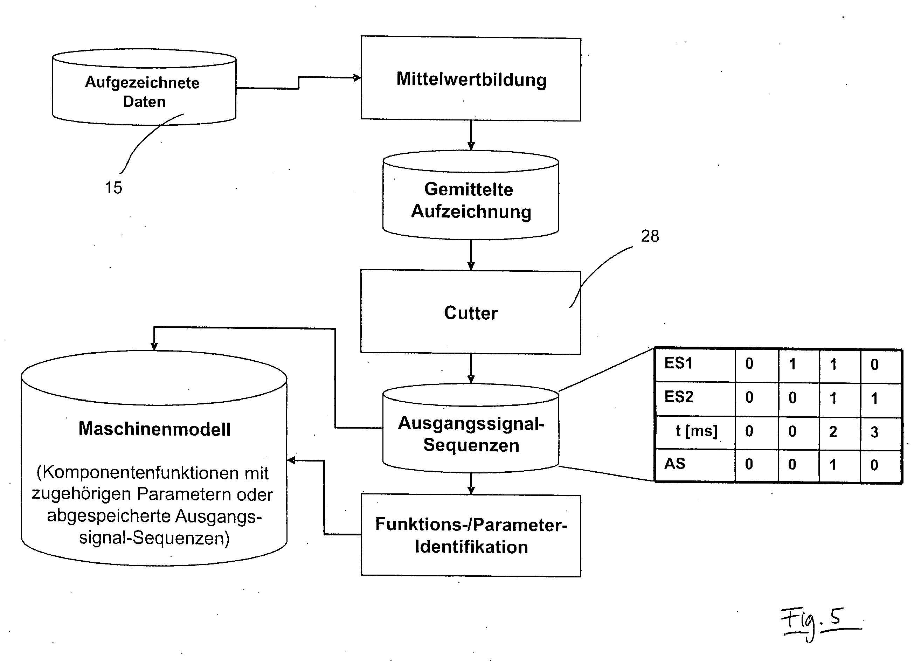

Figur 5 zeigt eine mögliche Ausprägung der Maschinenmodell-Erzeugungseinheit 16. Dort werden in einer bevorzugten Ausführung der Erfindung zunächst die aufgezeichneten Daten aus dem Datenspeicher 15 ausgelesen, die einzelnen Signalsequenzen hinsichtlich Wiederholungen untersucht, gemittelt und als gemittelte Aufzeichnung wieder abgelegt.

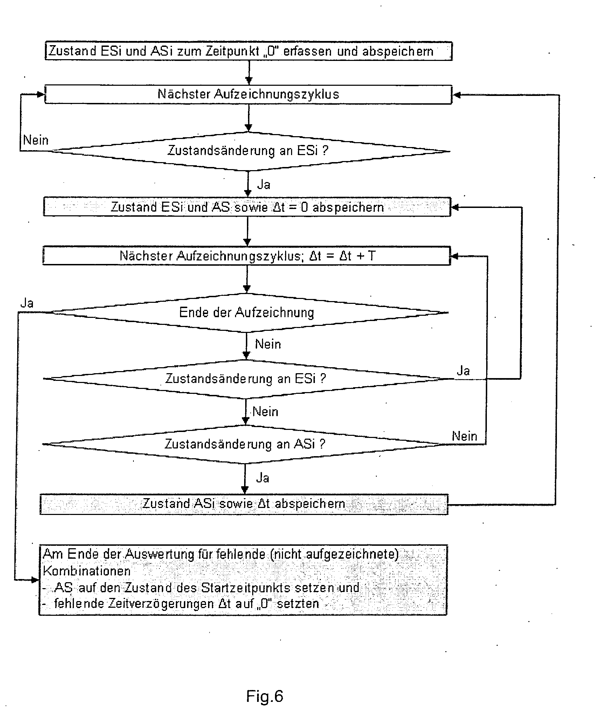

Anschließend läuft ein so genannter Cutter 28 (Basisalgorithmus siehe Figur 6) über die optimierten Ausgangssignal-Sequenzen. Sofern ein so genannter Player innerhalb des Solvers vorhanden ist, können die Ausgangssignal-Sequenzen mit den zugehörigen Eingangssignalkombinationen einer Komponente direkt als Komponentenmodell (als Teil des Maschinenmodells) abgespeichert werden. Sofern die jeweilige Komponente mit Hilfe einer mathematischen Funktion beschrieben wird, ist zusätzlich die Funktion sowie deren Parameter zu ermitteln.

Die Funktionsbereiche Mittelwertbildung, Cutter und Funktions-/Parameteridentifikation können auch in anderer Reihenfolge angeordnet werden. Denkbar wäre auch das zunächst ein Cutter Ausgangssignalsequenzen ermittelt, diese dann anschießend gemittelt werden und dann die Funktions-/Parameteridentifikation erfolgt. Die Mittelwertbildung könnte man sich auch als letzte Einheit vorstellen, wobei dann die Parameterwerte gemittelt werden.

Die Maschinenmodell-Adaptionseinheit 17 zeigt im Wesentlichen den gleichen Aufbau wie in Figur 5 gezeigt. Lediglich anstelle der Funktions-/Parameteridentifikation tritt ausschließlich eine Parameteridentifikation, da durch das Maschinen-/Komponentenmodell die Funktion bereits vorgegeben ist.

In Figur 6 ist ein Basis-Algorithmus des Cutters für boolesche Funktionen zur Maschinenmodell-Erzeugung gezeigt. Dabei werden boolesche Funktionen einer Komponente, beispielsweise einer Hydraulikpumpe, u.U. mit einer Zeitverzögerung zugrunde gelegt.

Zuerst werden Eingangssignale ESi {i • (1, 2, 3, ...)} und Ausgangssignale ASi {i • (1, 2, 3, ...)} zum Startzeitpunkt erfasst. Anschließend werden im Wesentlichen Zustandsänderungen der Ausgangssignale in Abhängigkeit der Änderungen der Eingangssignale erfasst und die zugehörige Zeitverzögerung Δt übernommen, beispielsweise in einer Tabelle (siehe Figur 4 sowie Figur 5).

Anhand der booleschen Daten bzw. der Beziehung zwischen Eingangs- und Ausgangssignalen können im Funktionsbereich der Funktions-/Parameteridentifikation der Datenaufbereitungseinheit die zugehörige boolesche Funktionen in einfacher Weise ermittelt werden. Vorhandene Zeitverzögerungswerte werden ebenfalls ermittelt.

Auf Grundlage der erstellten Tabelle (vgl. Fig. 4 und Fig. 5) und der zusätzlich einzugebenden bzw. eingebbaren Information für fehlende (nicht aufgezeichnete) Kombinationen kann die zugehörige boolesche Funktion einschließlich der Verzögerungszeit der betreffenden Komponente für Maschinenmodell erzeugt werden.

Ein ähnlicher Algorithmus ist auch bei nicht booleschen Funktionen unter Berücksichtung von zeitlichen Verzögerungen möglich. Auch hier wird im Cutter der Zustand der Eingangssignale sowie der Ausgangssignale zum Startzeitpunkt 0 erfasst und abgespeichert. Wenn jedoch in diesem Fall eine Zustandsänderung an einem der Eingangssignale auftritt, dann übernimmt der Cutter das Ausgangssignale ASi kontinuierlich und nicht nur einen Einzelwert wie bei den boolschen Funktionen. Sobald eine erneute Zustandsänderung an einem der Eingangssignale ESᵢ erfolgt, werden die aufgezeichneten Daten vom Cutter unter der zugehörigen Bezeichnung abgespeichert.

Auch hier werden am Ende der Auswertung für fehlende (nicht aufgezeichnete) Kombinationen der Ausgangssignale ASi auf den Zustand des Startzeitpunkt gesetzt.

Die Definition fehlender Kombinationen erfolgt auch hier durch den Anwender. Des Weiteren hat der Anwender die Möglichkeit bereits vorhandene Aufzeichnungen zu modifizieren. Eine Optimierung der aufgezeichneten Daten kann dadurch erfolgen, dass sich wiederholende Daten entfallen können. Alternativ zur direkten Ausgabe der aufgezeichneten (u.U. auch optimierten) Ausgangssignale im Solver der virtuellen Maschine / Anlage können (wie oben für boolesche Funktionen bereits beschrieben, siehe Figur 5) für die aufgezeichneten Signaldaten die zugehörigen Funktionen (zum Beispiel der Grad einer entsprechenden Polynomfunktion sowie die zugehörigen Koeffizienten des Polynoms) ermittelt werden, sofern dies für die Abarbeitung (Solver) günstiger ist.

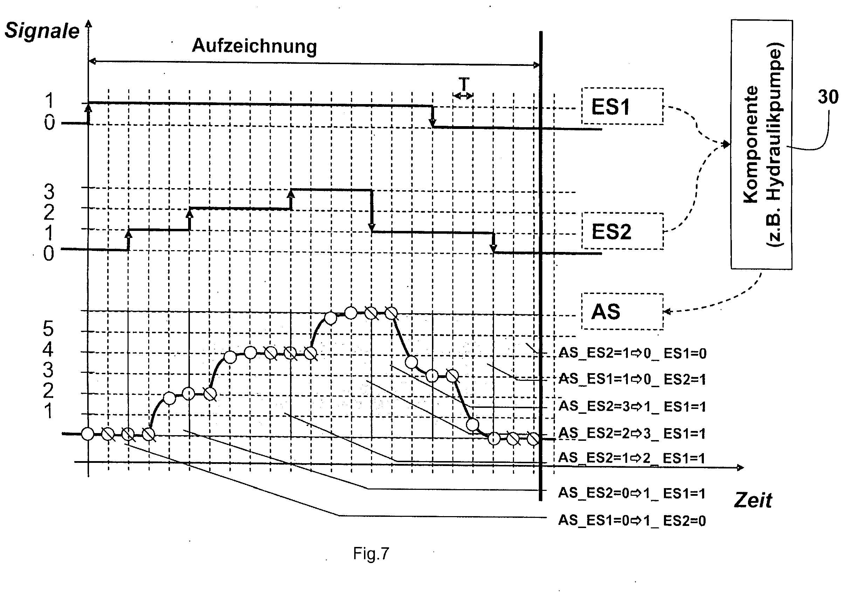

Die Maschinenmodell-Erzeugung für Komponenten mit nicht-booleschen Funktionen (beispielsweise einer Hydraulikpumpe) wird in Fig. 7 näher erläutert. Die Bezeichnung der Aufnahmesequenzen der Ausgangssignale in Abhängigkeit der Änderung an einem Eingangsignal ist in Figur 7 rechts unten abgebildet (AS_ES1 = 0→1_ES2=0, usw.)

In einer bevorzugten Ausführung werden die aufgezeichneten Daten aus dem Datenspeicher 15 ausgelesen, hinsichtlich Wiederholungen untersucht, gemittelt einem so genannter Cutter (Basisalgorithmus siehe Figur 6) zugeführt und anschließend optional eine Funktions-/Parameteridentifikation durchgeführt.

Die Funktionsbereiche Mittelwertbildung, Cutter und Funktions-/Parameteridentifikation können auch in anderer Reihenfolge angeordnet werden. Denkbar wäre auch das zunächst ein Cutter Ausgangssignalsequenzen ermittelt, diese dann anschießend gemittelt werden und dann die Funktions-/Parameteridentifikation erfolgt. Die Mittelwertbildung könnte man sich ach als letzte Einheit vorstellen, wobei dann die Parameterwerte gemittelt werden.

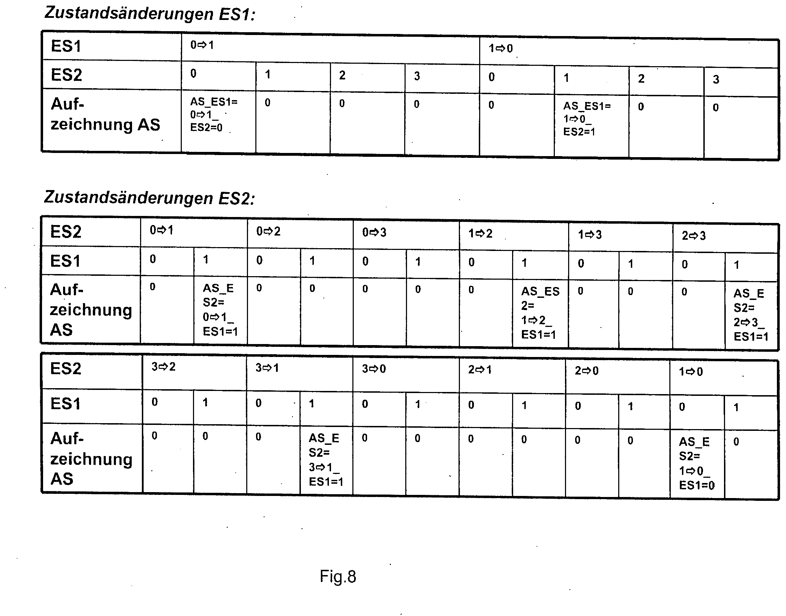

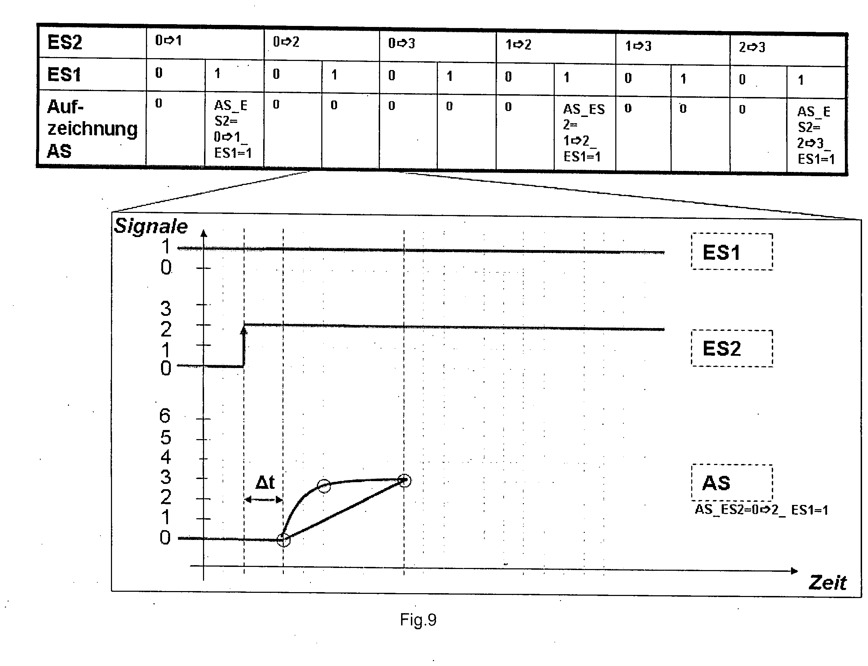

Figur 7 erläutert beispielhaft unter Bezugnahme auf Figur 8 und Figur 9 die Maschinenmodell-Erzeugung bzw. den Algorithmus für Maschinenkomponenten mit nicht-booleschen Funktionen, wie etwa einer Hydraulikpumpe. Nach einer Mittelwertbildung der Signale (siehe oben) erfasst der Cutter das Ausgangssignal AS in Abhängigkeit der Eingangssignale ES 1 und ES 2, wie in den Tabellen (Fig. 8) ausgeführt. In der ersten Tabelle werden die Zustandsänderungen des ersten Signals ES 1 erfasst. Zustandsänderungen des zweiten Eingangssignals ES 2 werden in der unteren Tabelle (aus Platzgründen zwei Tabellen) der Fig. 8 erfasst.

Figur 7 verdeutlicht des Weiteren die Möglichkeit der Optimierung der vom Cutter generierten Daten. In Figur 5 könnte man sich einen solchen Optimierer am Ende des Cutters vorstellen. In Figur 7 sind beispielsweise gleiche Datenpunkte innerhalb einer Aufzeichnungssequenz durchgestrichen, sie könnten ohne Verluste hinsichtlich der Aufzeichnungsgenauigkeit entfernt werden.

Wie Figur 9 zeigt, können vorhandene Aufzeichnungen vom Anwender verifiziert werden und bei Bedarf abgeändert werden. Des Weiteren können fehlende Aufzeichnungen durch den Anwender definiert werden. Die Definition eines Kurvenverlaufs 26 kann hierbei sowohl mittels einzelner Punkte (Füllen einer Cutter-Sequenz) oder mittels Kurven, wie z.B. einer Exponentialfunktion, erfolgen. Verzögerungen (Δt-Werte) können hierbei ebenfalls problemlos berücksichtigt werden.

Die Tabelle in Figur 9 stimmt dabei mit der mittleren Tabelle aus Figur 8 überein.

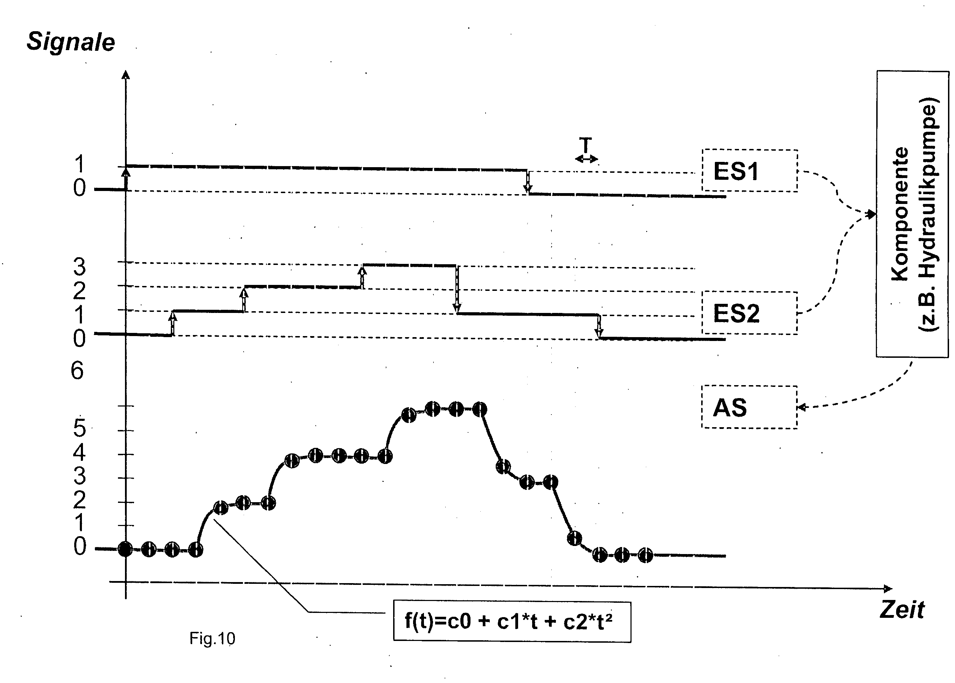

Die Adaption eines bereits vorhandenen Maschinenmodells bzw. bereits vorhandenen Komponentenmodelle kann auch mit nicht-booleschen Funktionen erfolgen, wie Fig. 10 veranschaulicht. In dem hier gezeigten Beispiel wird ein digitales Signal ES 1 und ein zweites digitales Signal ES2 mit mehreren Pegelwerten (1, 2, 3)verwendet. Diese können ebenfalls einer Hydraulikpumpe zugeführte Signale sein. Das Ausgangssignal AS, unten in Fig. 10, hat ebenfalls mehrere Pegelwerte (1-5).

Mit dem Durchlauf der Maschinenmodell-Adaptionseinheit ähnlich der in Figur 5 dargestellten Maschinenmodell-Erzeugungseinheit) erfolgt in der letzten Funktionseinheit die Parameteridentifikation (hier ohne Funktionsidentifikation, da die betreffenden Funktionen ja bereits vorgegeben sind). Im gezeigten Beispiel wird ein Polynom 2-ten Grades (die Funktion f (t) = c0 + c1 x t+ c2x t²) gezeigt. Die Koeffizienten c0, c1 und c2 gilt es zu bestimmen.

In der gleichen Weise wie bereits oben beschrieben, muss es auch hier möglich sein, für weitere nicht aufgetretene Zustände der Eingangssignale Aufzeichnungen der Ausgänge zu hinterlegen bzw. andere bereits aufgezeichnete Ausgangssequenzen zu verwenden, die sich bei anderen vergleichbaren Übergängen ergeben haben. So könnte beispielsweise ein nicht aufgezeichneter Übergang von dem Pegelwert 1 zu dem Pegelwert 3 des Eingangssignals ES2 (bei ES1 = 1) angenähert werden durch einen bereits ermittelten Übergang, wie beispielsweise den Übergang von dem Pegelwert 1 zu dem Pegelwert 2.

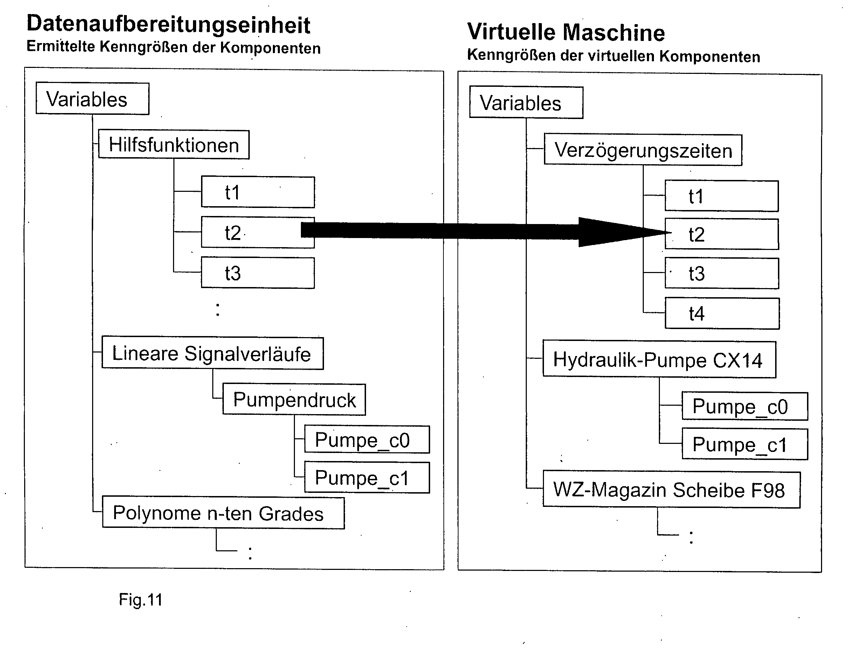

Figur 11 zeigt die beispielhaft die Übernahme der ermittelten Daten in das Maschinenmodell der virtuellen Maschine. Links in Fig. 11 sind die ermittelten Kenngrößen der Komponenten im Datenaufbereitungsmodul 4 dargestellt. Typische Kenngrößen sind die Ausführungszeiten von Hilfsfunktionen (Δt1, Δt2 und Δt3) oder wie beispielsweise der Verlauf eines Pumpendrucks in Form eines Polynoms n-ten Grades.

Diese Kenngrößen (Parameter) sowie die Funktion einer virtuelle Komponente, beispielsweise eine Exponentialfunktion einer virtuellen Hydraulikpumpe mit den zugehörigen Koeffizienten, wird an den Solver der virtuellen Maschine übergeben und dort zyklisch abgearbeitet. Auf diese Weise wird eine Verhaltens-Simulation der Maschine bzw. Anlage erreicht.

Alternativ zur so genannten Drag & Drop-Technik mittels Trees können die Daten auch (wie oben bereits beschrieben) mittel Import-/Exportfunktionen, die vorzugsweise im XML-Format erfolgen, oder automatisch am Ende eines Erstellungs- bzw. Adaptionsdurchlaufs anhand der Komponenten-IDs (in der Regel der eindeutige Name) zwischen der virtuellen Maschine und der Datenaufbereitungseinheit ausgetauscht werden.

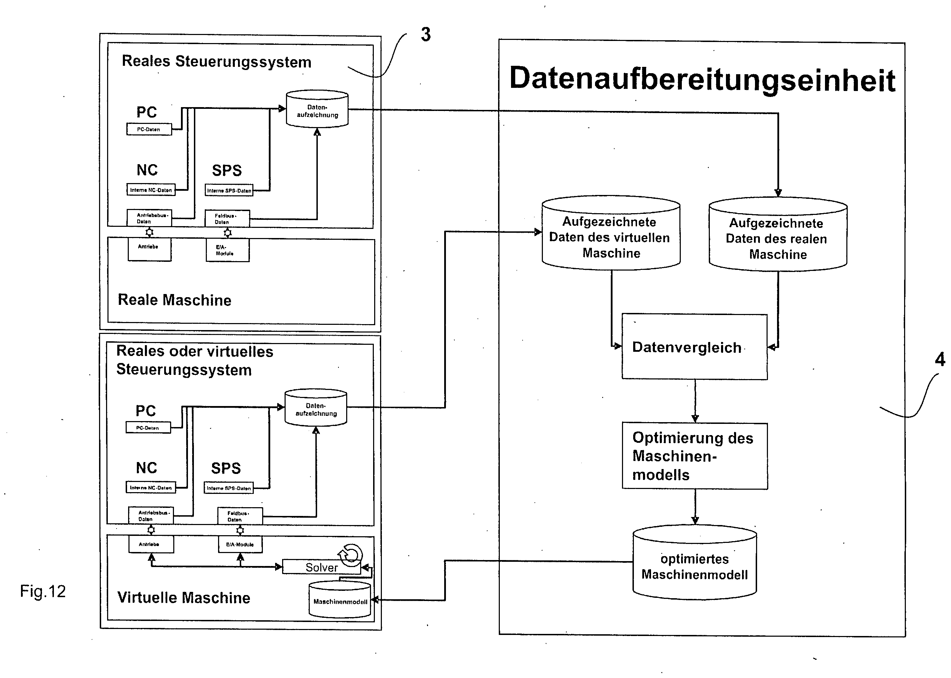

Eine Überprüfung des virtuellen Maschinenmodells kann mit einer realen Maschine überprüft werden, wie Fig. 12 zeigt. Die in Fig. 12 gezeigte Datenaufbereitungseinheit 4 erhält Aufzeichnungsdaten sowohl von der realen Maschine als von der eingesetzten virtuellen Maschine. Diese werden dann zwecks Optimierung des Maschinenmodells für jede einzelne Komponente verglichen und optimiert. Dies kann wie bereits oben beschrieben durch eine Angleichung der einzelnen Funktionen einschließlich der zugehörigen Koeffizienten oder alternativ durch ein Angleichen der aufgezeichneten Ausgangsdatensequenzen für die einzelnen Eingangskombinationen der einzelnen Komponenten erfolgen.

Eine Optimierung der aufgezeichneten Ausgangssignal-Sequenzen kann dadurch erfolgen, dass sich wiederholende Daten entfallen können. Dies gilt insbesondere für Signalwerte zum Ende der Aufzeichnung hin (siehe Figur 7).

Daneben ist ein Kopieren und Modifizieren von Signalverläufen für nicht aufgezeichnete Signalverläufe sowie das Editieren/Modifizieren bereits ermittelter Daten in Form von Tabellen möglich, wobei die Funktionen wahlweise über Punkte oder Kurven vorgegeben werden können.

Wie Figur 12 veranschaulicht, umfasst das Verfahren zur Überprüfung des Maschinen- oder Anlagenmodells bzw. der zugehörigen Komponentenmodelle (wie z.B. des Hydraulikpumpenmodells), dass auf dem realen Steuerungssystem 3 die zugehörigen Ein- und Ausgangssignale der betreffenden Komponente aufgezeichnet werden (wobei das reale Steuerungssystem 3 an der realen Maschine angeschlossen ist) und dass die entsprechenden Daten der virtuellen Komponente auf dem zweiten (realen oder virtuellen) Steuerungssystems aufgezeichnet werden, wobei das zweite Steuerungssystem an einer virtuellen Maschine angeschlossen ist, und dass die Aufzeichnungen der betreffenden Komponenten der virtuellen Maschine mit der realen Maschine u.U. optimiert und verglichen werden sowie eine auf dem Datenvergleich basierende Optimierung der betreffende Komponentenmodelle erfolgt und dann in optimierter Form der virtuellen Maschine zur Verfügung gestellt wird.

Neben einem Maschinenmodell, dessen Komponentenmodelle aus Funktionen mit den zugehörigen Parametern bestehen und einem Maschinenmodell, dessen Komponentenmodelle ausschließlich als Ausgangssignal-Sequenzen / Ausgangswerten besehen, sind auch Maschinenmodelle denkbar, bei denen ein Teil der Komponenten mittels Funktionen und zugehörige Parameter beschrieben wird und der andere Teil der Komponenten mittels Ausgangssignal-Sequenzen / Ausgangswerten.

Die Erfindung eignet sich sehr zur Verhaltenssimulation auch als Peripheriesimulation bezeichnet sowie zur Dynamik- oder Prozesssimulation einer Maschine/Anlage. Sogenannte "intelligente Algorithmen" können zur automatisierten Ermittlung des Maschinenverhaltens einbezogen werden.

Die vorliegende Erfindung kann nicht nur auf Maschinen bzw. Komponenten wie etwa eine Hydraulikpumpe erfolgen, sondern auch auf komplexe Anlagen, wobei auch anstatt elementarer Funktionen wie Zeitgliedfunktionen durchaus auch aufwändigere Funktionen zugrunde gelegt werden können.

Die vorliegende Erfindung bzw. die oben genannten Mechanismen zur Erstellung und Adaption von Modellen zur Verhaltenssimulation (häufig auch als Peripheriesimulation bezeichnet) können auch auf den Bereich der Dynamiksimulation sowie der Prozesssimulation übertragen werden.

### Bezugszeichenliste

- 1: Automatisierungssystem
- 2: Maschine
- 3: Steuerungssystem
- 4: Datenaufbereitungseinheit
- 5: SPS
- 6: NC-Steuerung
- 7: PC oder ausreichend Speicher
- 8: Datenaufzeichnungseinheit
- 10: Bus
- 11: Antriebsbus
- 12: Feldbus
- 13: Schnittstelle
- 14: E/A Module
- 15: Datenspeicher (zur Aufnahme bereits aufgezeichneter Daten)
- 16: Maschinenmodell-Erzeugungseinheit
- 17: Maschinenmodell-Adaptionseinheit
- 18: Maschinenmodellspeicher
- 19: Reale oder virtuelle Antriebsschnittstelle (bzw. virtuelle Antriebe) der virtuellen Maschine
- 20: Reale oder virtuelle Feldbusschnittstelle (bzw. virtuelle E/A Module) der virtuellen Maschine
- 23: Solver
- 24: Maschinenmodell
- 26: Verlauf
- 28: Cutter
- 30: Hydraulikpumpe
- T: Aufzeichnungstakt
- ES₁, ES₂: Eingangszustände
- AS: Ausgangszustand (Ausgangszustände)
- t1, t2, t3, t4: Zeitpunkte
- Δt: Verzögerungszeit

## Patentansprüche

1. Automatisierungssystem (1) zur Erstellung und/oder Adaption eines Maschinenmodells einer Maschine (2; 2') zur Verhaltenssimulation der Maschine (2; 2'), mit:
einem Steuerungssystem (3) mit einer Datenaufzeichnungseinheit (8) zur Aufzeichnung von Maschinendaten der Maschine (2; 2'),
einer Datenaufbereitungseinheit (4) mit einer Maschinenmodell-Erzeugungseinheit (16) zur Erstellung eines Maschinenmodells der Maschine (2; 2'),
einer Maschinenmodell-Adaptionseinheit (17) zur Adaption des von der Maschinenmodell-Erzeugungseinheit (16) erstellten Maschinenmodells an eine geänderte Konfiguration der Maschine (2; 2');
wobei die Datenaufbereitungseinheit (4) zum Analysieren der in der Datenaufzeichnungseinheit (8) aufgezeichneten Daten ausgestaltet ist, um Kenngrößen von Komponenten der Maschine (2; 2') zu ermitteln, und die Maschinenmodell-Erzeugungseinheit (16) zur Erstellung eines Maschinenmodells der Maschine (2; 2') ausgestaltet ist, indem die in der Datenaufzeichnungseinheit (8) aufgezeichneten Daten einer Datenanalyse unter Verwendung mathematischer Hilfsmittel unterzogen werden, und
wobei die Maschinenmodell-Erzeugungseinheit (16) und die Maschinenmodell-Adaptionseinheit (17) dahingehend ausgestaltet sind, dass sie die durch die Datenaufbereitungseinheit (4) ermittelten Kenngrößen automatisch zur Erstellung und/oder Adaption des Maschinenmodells übernehmen; **gekennzeichnet durch**
einen in der Datenaufbereitungseinheit (4) angeordneten Cutter (28), welcher ausgestaltet ist, aus einer Langzeitaufnahme für alle auftretenden Eingangssignal-Kombinationen bei jeder Änderung eines Eingangssignals ein zugehöriges Ausgangssignal unter Berücksichtigung einer zeitlichen Verzögerung Δt auszuschneiden.

2. Automatisierungssystem nach Anspruch 1,
**gekennzeichnet durch**
einen Solver (23), eingerichtet, zyklisch in einem vorgegebenen Takt das Maschinenmodell abzuarbeiten, und
einen Player, welcher innerhalb des Solvers (23) vorhanden ist und eingerichtet ist, während der Abarbeitung des Maschinenmodells in Abhängigkeit von zugehörigen Eingangssignalkombinationen für die jeweilige Komponente eine zugehörige Ausgangssignalsequenz bzw. einen zugehörigen Ausgangswert taktsynchron auszugeben, wobei das Automatisierungssystem eingerichtet ist, die Ausgangssignal-Sequenzen bzw. die Ausgangswerte für die einzelnen Komponenten direkt als Komponentenmodelle, welche einen Teil des Maschinenmodells darstellen, abzuspeichern.

3. Automatisierungssystem nach einem der Ansprüche 1 oder 2,
**dadurch gekennzeichnet, dass**
das Steuerungssystem (3) eine speicherprogrammierbare Steuerung (5) umfasst.

4. Automatisierungssystem nach einem der vorhergehende Ansprüche,
**dadurch gekennzeichnet, dass**
das Steuerungssystem eine NC-Steuerung (6) oder wahlweise eine Motion- bzw. Robotersteuerung umfasst.

5. Automatisierungssystem nach einem der vorhergehenden Ansprüche,
**dadurch gekennzeichnet, dass**
das Steuerungssystem zum Zeitpunkt der Datenerfassung einen PC (7) mit Speicher umfasst.

6. Automatisierungssystem nach einem der vorhergehenden Ansprüche,
**dadurch gekennzeichnet, dass**
das Steuerungssystem sowohl eine SPS (5), eine NC-Steuerung (6) als auch einen PC (7) umfasst.

7. Automatisierungssystem nach einem der vorhergehenden Ansprüche,
**dadurch gekennzeichnet, dass**
die Datenaufbereitungseinheit (4) in das Steuerungssystem (3) integriert ist.

8. Automatisierungssystem nach einem der vorhergehenden Ansprüche,
**dadurch gekennzeichnet, dass**
die Datenaufbereitungseinheit (4) über ein Netzwerk oder das Internet mit dem Steuerungssystem (3) in Kommunikationsverbindung steht.

9. Verfahren zur Erstellung und/oder Adaption eines Maschinenmodells einer Maschine (2; 2'), welches zur Verhaltenssimulation der Maschine (2; 2') dient,
mit den Schritten
- Aufzeichnen von Maschinendaten der Maschine (2; 2') mit einer Datenaufzeichnungseinheit (8) eines Steuerungssystems (3),
- Analysieren der in der Datenaufzeichnungseinheit (8) aufgezeichneten Daten unter Verwendung mathematischer Hilfsmittel mittels einer Maschinenmodell-Erzeugungseinheit (16) einer Datenaufbereitungseinheit (4), um Kenngrößen von Komponenten der Maschine (2; 2') zu ermitteln, ,
- Erstellen und/oder Adaptieren des Maschinenmodells unter Verwendung der bei dem Analyseschritt ermittelten Kenngrößen, indem die Kenngrößen in automatisierter Weise in das Maschinen- oder Anlagenmodell übernommen werden,
**gekennzeichnet durch**
Ausschneiden, aus einer Langzeitaufnahme, für alle auftretenden Eingangssignal-Kombinationen, bei jeder Änderung eines Eingangssignals, eines zugehörigen Ausgangssignals unter Berücksichtigung einer zeitlichen Verzögerung Δt, mittels eines in der Datenaufbereitungseinheit (4) angeordneten Cutters (28).

10. Verfahren nach Anspruch 9, zusätzlich **gekennzeichnet durch** die Schritte:
- Abarbeiten des Maschinenmodells zyklisch in einem vorgegebenen Takt mittels eines Solvers (23),
- während der Abarbeitung des Maschinenmodells, taktsynchrones Ausgeben einer zugehörigen Ausgangssignalsequenz bzw. eines zugehörigen Ausgangswerts in Abhängigkeit einer zugehörigen Eingangssignalkombination für eine jeweilige Komponente mittels eines innerhalb des Solvers (23) vorhandenen Players, und
- Abspeichern der Ausgangssignal-Sequenzen bzw. der Ausgangswerte für die einzelnen Komponenten direkt als Komponentenmodelle, welche einen Teil des Maschinenmodells darstellen.

## Claims

1. Automation system (1) for creating and/or adapting a machine model of a machine (2; 2') for simulating the behaviour of the machine (2; 2'), having:
a control system (3) having a data recording unit (8) for recording machine data relating to the machine (2; 2'),
a data processing unit (4) having a machine model generation unit (16) for creating a machine model of the machine (2; 2'),
a machine model adaptation unit (17) for adapting the machine model created by the machine model generation unit (16) to a changed configuration of the machine (2; 2');
wherein the data processing unit (4) is configured to analyse the data recorded in the data recording unit (8) in order to determine characteristic variables of components of the machine (2; 2'), and the machine model generation unit (16) is configured to create a machine model of the machine (2; 2') by subjecting the data recorded in the data recording unit (8) to a data analysis using mathematical aids, and
wherein the machine model generation unit (16) and the machine model adaptation unit (17) are configured such that they automatically accept the characteristic variables determined by the data processing unit (4) for the purpose of creating and/or adapting the machine model;
**characterized by**
a cutter (28) which is arranged in the data processing unit (4) and is configured to cut out an associated output signal from a long-term recording for all input signal combinations which occur in the case of each change in an input signal taking into account a time delay Δt.

2. Automation system according to Claim 1, **characterized by**
a solver (23) set up to cyclically process the machine model in a predefined clock cycle, and
a player which is present inside the solver (23) and is set up to output an associated output signal sequence or an associated output value in a clock-synchronous manner during the processing of the machine model on the basis of associated input signal combinations for the respective component,
wherein the automation system is set up to store the output signal sequences or the output values for the individual components directly as component models which constitute part of the machine model.

3. Automation system according to either of Claims 1 and 2,
**characterized in that**
the control system (3) comprises a programmable logic controller (5).

4. Automation system according to one of the preceding claims,
**characterized in that**
the control system comprises an NC controller (6) or optionally a motion or robot controller.

5. Automation system according to one of the preceding claims,
**characterized in that**
the control system comprises a PC (7) with a memory at the data acquisition time.

6. Automation system according to one of the preceding claims,
**characterized in that**
the control system comprises a PLC (5), an NC controller (6) and a PC (7).

7. Automation system according to one of the preceding claims,
**characterized in that**
the data processing unit (4) is integrated in the control system (3).

8. Automation system according to one of the preceding claims,
**characterized in that**
the data processing unit (4) has a communication connection to the control system (3) via a network or the Internet.

9. Method for creating and/or adapting a machine model of a machine (2; 2') which is used to simulate the behaviour of the machine (2; 2'), having the steps of
- recording machine data relating to the machine (2; 2') using a data recording unit (8) of a control system (3),
- analysing the data recorded in the data recording unit (8) using mathematical aids by means of a machine model generation unit (16) of a data processing unit (4) in order to determine characteristic variables of components of the machine (2; 2'),
- creating and/or adapting the machine model using the characteristic variables determined in the analysis step by automatically accepting the characteristic variables into the machine or installation model,
**characterized by**
cutting out an associated output signal from a long-term recording for all input signal combinations which occur in the case of each change in an input signal taking into account a time delay Δt by means of a cutter (28) arranged in the data processing unit (4).

10. Method according to Claim 9, additionally **characterized by** the steps of:
- cyclically processing the machine model in a predefined clock cycle by means of a solver (23),
- outputting an associated output signal sequence or an associated output value in a clock-synchronous manner during the processing of the machine model on the basis of an associated input signal combination for a respective component by means of a player present inside the solver (23), and
- storing the output signal sequences or the output values for the individual components directly as component models which constitute part of the machine model.

## Revendications

1. Système d'automatisation (1) destiné à établir et/ou à adapter un modèle de machine d'une machine (2 ; 2') à des fins de simulation du comportement de la machine (2 ; 2'), comportant :
un système de commande (3) muni d'une unité d'enregistrement de données (8) destinée à enregistrer des données de machine de la machine (2 ; 2'),
une unité de traitement de données (4) comportant une unité génératrice de modèle de machine (16) destinée à établir un modèle de machine de la machine (2 ; 2'),
une unité d'adaptation de modèle de machine (17) destinée à adapter le modèle de machine établi par l'unité génératrice de modèle de machine (16) à une configuration modifiée de la machine (2 ; 2') ;
dans lequel l'unité de traitement de données (4) est conçue pour analyser les données enregistrées dans l'unité d'enregistrement de données (8) afin de déterminer des grandeurs caractéristiques de composants de la machine (2 ; 2'), et l'unité génératrice de modèle de machine (16) est conçue pour établir un modèle de machine de la machine (2 ; 2') en soumettant les données enregistrées dans l'unité d'enregistrement de données (8) à une analyse de données par utilisation d'outils mathématiques, et
dans lequel l'unité génératrice de modèle de machine (16) et l'unité d'adaptation de modèle de machine (17) sont conçues de manière à reprendre automatiquement les grandeurs caractéristiques déterminées par l'unité de traitement de données (4) afin d'établir et/ou d'adapter le modèle de machine,
**caractérisé par** un découpeur (28) disposé dans l'unité de traitement de données (4), qui est conçu pour découper, dans un enregistrement de longue durée, pour toutes les combinaisons de signaux d'entrée se produisant et pour chaque modification d'une signal d'entrée, un signal de sortie associé en tenant compte d'un temps de retard Δt.

2. Système d'automatisation selon la revendication 1,
**caractérisé par** un résolveur (23), conçu pour traiter le modèle de machine cycliquement au cours d'un cycle d'horloge prédéterminé ; et
un lecteur, qui est prévu dans le résolveur (23) et est conçu pour délivrer, pendant le traitement du modèle de machine, en fonction de combinaisons de signaux d'entrée associés, pour les composants respectifs, une séquence de signaux de sortie associés ou une valeur de sortie associée en synchronisme avec l'horloge, dans lequel le système d'automatisation est conçu pour stocker directement en tant que modèles constitutifs qui représentent une partie du modèle de machine, les séquences de signaux de sortie ou les valeurs de sortie correspondant aux composants individuels.

3. Système d'automatisation selon l'une des revendications 1 ou 2,
**caractérisé en ce que** le système de commande (3) comprend un dispositif de commande programmable en mémoire (5).

4. Système d'automatisation selon l'une des revendications précédentes,
**caractérisé en ce que** le système de commande comprend un dispositif de commande NC (6) ou, de manière sélective, un dispositif de commande de mouvement ou robotisé.

5. Système d'automatisation selon l'une des revendications précédentes,
**caractérisé en ce que** le système de commande comprend au moment de la détection de données un PC (7) muni d'une mémoire.

6. Système d'automatisation selon l'une des revendications précédentes,
**caractérisé en ce que** le système de commande comprend également un SPS (5), un dispositif de commande NC (6) ainsi qu'un PC (7).

7. Système d'automatisation selon l'une des revendications précédentes,
**caractérisé en ce que** l'unité de traitement de données (4) est intégrée au système de commande (3).

8. Système d'automatisation selon l'une des revendications précédentes,
**caractérisé en ce que** l'unité de traitement de données (4) est en liaison de communication par l'intermédiaire d'un réseau ou de l'internet avec le système de commande (3).

9. Procédé d'établissement et/ou d'adaptation d'un modèle de machine d'une machine (2 ; 2'), qui est utilisé pour la simulation du comportement de la machine (2 ; 2'), comportant les étapes consistant à :
- enregistrer des données de machine de la machine (2 ; 2') au moyen d'une unité d'enregistrement de données (8) d'un système de commande (3),
- analyser les données enregistrées dans l'unité d'enregistrement de données (8) par utilisation d'outils mathématiques au moyen d'une unité génératrice de modèle de machine (16) d'une unité de traitement de données (4), afin de déterminer des grandeurs caractéristiques de composants de la machine (2 ; 2'),
- établir et/ou adapter le modèle de machine par utilisation des grandeurs caractéristiques déterminées lors de l'étape d'analyse en reprenant les grandeurs caractéristiques de manière automatisée dans le modèle de machine ou d'installation,
**caractérisé par** le fait de découper, dans un enregistrement de grande durée, pour toutes les combinaisons de signaux d'entrée se produisant, pour chaque modification d'un signal d'entrée, un signal de sortie associé en tenant compte d'un temps de retard Δt, au moyen d'un découpeur (28) disposé dans l'unité de traitement de données (4).

10. Procédé selon la revendication 9,
**caractérisé en outre par** les étapes consistant à :
- traiter cycliquement le modèle de machine au cours d'un cycle d'horloge prédéterminé au moyen d'un résolveur (23),
- pendant le traitement du modèle de machine, délivrer de manière synchrone avec l'horloge une séquence de signaux de sortie associés ou une valeur de sortie associée en fonction d'une combinaison de signaux d'entrée associée pour un composant respectif, au moyen d'un lecteur présent dans le résolveur (23), et
- stocker directement en tant que modèles constitutifs, qui représentent une partie du modèle de machine, les séquences de signaux de sortie ou les valeurs de sortie correspondant aux composants individuels.
